# EUROPEAN PATENT APPLICATION

(11) **EP 1 757 668 A1**
(43) Date of publication of application: **28.02.2007**
(21) Application number: 04746392.2
(22) Date of filing: 18.06.2004
(51) Int. Cl.: C09K 3/10, B60J 5/00

(54) **SEALING MATERIAL FOR AUTOMOBILE DOOR**

(71) Applicant: SUNSTAR GIKEN KABUSHIKI KAISHA, Takatsuki-shi, Osaka 569-1195 (JP); HONDA MOTOR CO., Ltd., Tokyo 107-8556 (JP)
(72) Inventor: MINAMI, Hirotaka., Sunstar Giken Kabushiki Kaisha, Takatsuki-shi, Osaka 569-1195 (JP); MAYAMA, Yoshinori, Sunstar Giken Kabushiki Kaisha, Takatsuki-shi, Osaka 569-1195 (JP); YOSHIMOTO, Yasuyuki Sunstar Giken Kabushiki Kaisha, Takatsuki-shi, Osaka 569-1195 (JP); NAKATA, Yoshihiro, Sunstar Giken Kabushiki Kaisha, Takatsuki-shi, Osaka 569-1195 (JP); HASEGAWA,Kiyoshi K. KAISHA HONDA GIJUTSU KENKYUSHO, Wako-shi, Saitama 351-0193 (JP)
(74) Representative: Albrecht, Thomas
(86) International application number: PCT/JP2004/008923
(87) International publication number: WO 2005/123863

(57) **Abstract**

The present invention provides a sealant for automobile doors, which is used to bond an inside screen to the inner panel of an automobile door and which is excellent in hot creep resistance and shear adhesive strength at high temperatures, particularly in consideration of the application thereof in summer.

The sealant for automobile doors of the present invention comprises partially crosslinked NBR and/or SBR, a plasticizer and a filler.

## Description

### TECHNICAL FIELD

The present invention relates to a sealant for automobile doors, and in particular, to a sealant which is used to bond an inside screen to the inner panel of an automobile door and which is excellent in hot creep resistance and shear adhesive strength at high temperatures, particularly in consideration of the application thereof in summer, since the sealant comprises partially crosslinked synthetic rubber(s) as a rubber component.

### BACKGROUND OF THE INVENTION

A main purpose of sealants of this type is to impart waterproof to automobile doors. Hitherto, the conventional solvent-containing type butyl rubber-base sealants comprise butyl rubbers, plasticizers, tackifiers, fillers, solvents, etc. and are in the form of paste at ordinary temperatures. These sealants, however, are lacking in strength at high temperatures (for example 80°C) in consideration of the use in summer, such as hot creep resistance and shear adhesive strength. Therefore, it is not rare that the main purpose of waterproof is failed to attain, because inside screens (generally, films of polyethylene or polyvinyl chloride) tend to peel or shift their positions.

On the other hand, there is proposed a solvent-free sealant which has a high viscosity at ordinary temperatures. This sealant comprises a polybutene resin, lubricant, tackifier, filler and fibrous component, and is of hot applying type which is discharged suitable for use in application at a temperature of 40 to 80°C, and the hot applying type sealant is used for the purpose of preventing the flowing of the sealant at 80°C or facilitating the peeling and recovering thereof in the maintenance of automobile doors, because of its low peel strength (cf. JP-A-2000-26836).

### DISCLOSURE OF THE INVENTION

The present inventors have vigorously proceeded with their researches in order to provide a sealant for automobile doors, which has a dischargeability at a hot applying temperature, competitive with the above hot applying type sealant and shows high strength under high temperature. As a result, they have found out that a desired sealant can be obtained by blending partially crosslinked butadiene-acrylonitrile rubber (NBR) and/or butadiene-styrene rubber (SBR) as a rubber component, a plasticizer and a filler. The present invention was accomplished based on such a finding.

The present invention provides a sealant for automobile doors, which comprises partially crosslinked NBR and/or SBR, a plasticizer and a filler and which is used to bond an inside screen to the inner panel of an automobile door.

The partially crosslinked NBR and SBR to be used in the present invention are prepared by partially crosslinking NBR and SBR with a crosslinking agent such as divinylbenzene or sulfur, respectively, and are commercially available from JSR Co. and Nippon Zeon Co., Ltd.

The sealant of the present invention may contain an uncrosslinked synthetic rubber which is not crosslinked at all in addition to the partially crosslinked synthetic rubber(s). Examples of the uncrosslinked synthetic rubber include acrylonitrile-isoprene rubber (NIR), NBR, SBR, butadiene rubber, isoprene rubber and the like, and especially preferable is a synthetic rubber having a Mooney viscosity of 30 to 50 (JIS K-6300).

In the present invention, the plasticizer is used to swell and dissolve the above partially crosslinked synthetic rubber(s), and specific examples of the plasticizer include phthalates, fractionated products of petroleum, for example DOP, DBP, DIDP, BBP, DINP and DHP, and higher alcohol phthalates.

In the present invention, the filler is necessary to adjust the flowability and physical properties of the sealant, and examples thereof include heavy calcium carbonate, surface treated calcium carbonate, clay, talc, silica powder, cellulose powder, resin powder, metal powder, glass microballoons, plastic microballoons, fibrous filler, acicular filler, etc.

The sealant for automobile doors, according to the present invention, comprises the above partially crosslinked NBR and/or SBR, a plasticizer and a filler as essential components. Preferably, the above uncrosslinked synthetic rubber (especially uncrosslinked NBR) is additionally blended to these essential components. Optionally, if needed, commonly used additives such as a pigment, a tackifier, an antioxidant, a crosslinking agent, etc. may be appropriately added.

In this regard, the total content of the partially crosslinked synthetic rubbers may be selected usually in the range of 5 to 45% (% by weight, unless otherwise specified), preferably 5 to 25%. When this total content is smaller than 5%, the resultant sealant may not have sufficient hot creep resistance. When it exceeds 45%, the dischargeability or workability of the resultant sealant tends to become undesirable.

### BEST MODES FOR CARRYING OUT THE INVENTION

Next, the present invention will be explained in more detail by way of Example and Comparative Example.

### Example 1

A partially crosslinked NBR ("DN214" available from JSR Co.) (5.5 parts) (parts by weight, unless otherwise specified) and a partially crosslinked SBR ("Nipol 1009" available from Nippon Zeon Co., Ltd.) (5.5 parts) are formed into sheets, using mixing rolls, and these synthetic rubbers are mixed and dissolved in DINP (33 parts) with a pressure kneader. Then, heavy calcium carbonate (36 parts) and surface treated calcium carbonate (20 parts) are added, and the mixture is homogenously dispersed with a kneader to obtain a sealant (100 parts) for automobile doors.

### Comparative Example 1

The butyl rubber base sealant containing a solvent which is in the form of paste at ordinary temperatures is used.

### Performance Tests

The sealants of Example 1 and Comparative Example 1 are subjected to the following performance tests.

### (1) SOD viscosity

A SOD viscometer is used to measure the SOD viscosity (Pa.s) of each of the sealants at each of the shear rates (sec⁻¹) and each of the measuring temperatures. This measurement is done when each of the sealants is in the initial condition, after the sealant is stored at 50°C for 5 days, and after the sealant is stored at 80°C for 5 days, respectively. The results are shown in Table 1 below.

**Table 1**

| Unit: Pa.s | | | | | | | | |
|---|---|---|---|---|---|---|---|---|
| | | | | Shear rate (sec⁻¹) | | | | |
| | | | | 10 | 20 | 78 | 200 | 430 |
| Ex.1 | Initial condition | Measuring temperature | 20°C | - | 696 | 294 | - | 133 |
| | | | 60°C | 645 | 411 | 155 | 91 | 51 |
| | | | 80°C | 560 | 350 | 134 | 73 | 46 |
| | after 50° X 5 days | | 60°C | 739 | 459 | 184 | 103 | 61 |
| | after 80° X 5 days | | 60°C | 872 | 510 | 199 | 112 | 63 |
| C.Ex.1 | Initial condition | | 20°C | 525 | 421 | 289 | 226 | S.O. |
| | | | 30°C | 335 | 246 | 156 | 124 | 104 |
| | | | 40°C | 283 | 204 | 134 | 103 | 84 |

| | | | | | | | | |
|---|---|---|---|---|---|---|---|---|
| Note) S.O.: scale over | | | | | | | | |

### (2) Shear Adhesive Strength

Each of the sealants is U-like applied to the peripheral edges of a painted steel sheet (hot applying at 60°C in case of the sealant of Example 1), and a polyester film is laminated on the painted steel sheet. The laminate is cured at 20°C and 65% RH for 2 hours, and then, the shear adhesive strength of the laminate (N/6.25 cm²) is measured at each of the measuring temperatures. The results are shown in Table 2 below.

**Table 2**

| Measuring temp. | Example 1 | Comparative Example 1 |
|---|---|---|
| 20°C | 4.19 CF | 2.15 CF |
| 60°C | 3.11 CF | 0.58 CF |
| 80°C | 2.86 CF | 0.50 CF |

| | | |
|---|---|---|
| Note) CF: the cohesive failure of the sealant | | |

### (3) Hot Creep Test

Each of the sealants is so applied to an electrodeposition steel sheet as to form a bead-like layer thereof (10 mm width X 100 mm length X 5 mm thickness) (hot application at 60°C in case of the sealant of Example 1). A polyethylene film of 20 mm width X 150 mm length is laminated on the bead-like sealant layer, so that the polyethylene film can be projected by just 40 mm in the lengthwise direction from the sealant layer. Then, the laminate is cured at 20°C and 65% RH for 2 hours. After that, a load weighing 0.5 g or 1.0 g is attached to the projected edge of the film, and the test laminate is raised upright so that the load can be on the upper side (while the edge of film is bent due to the weight of the load). The test laminate in this state is left to stand in an oven at 80°C for 3 hours or 24 hours. After that, the peeling and shift of the film are observed. The results are shown in Table 3 below.

**Table 3**

| Load | 80°C | Example 1 | Comparative Example 1 |
|---|---|---|---|
| 0.5 g | 3 hrs. | No change | AF: 60 mm < |
| 0.5 g | 24 hrs. | No change | AF: 60 mm < |
| 1.0 g | 3 hrs. | Cf: 0.5 to 1.0 mm | AF: 60 mm < |
| 1.0 g | 24 hrs. | Cf: 0.5 to 1.0 mm | AF: 60 mm < |

| | | | |
|---|---|---|---|
| Note) AF: an interface failure between the film and the sealant CF: the cohesive failure of the sealant mm: the unit of the length of the peeled portion of the film | | | |

## Claims

1. A sealant for automobile doors, for use in the bonding of an inside screen to the inner panel of an automobile door, said sealant comprising partially crosslinked butadiene-acrylonitrile rubber (NBR) and/or butadiene-styrene rubber (SBR), a plasticizer and a filler.

2. The sealant of claim 1, wherein the total content of the partially crosslinked NBR and/or SBR is 5 to 45% by weight.
